(19) Europäisches Patentamt / European Patent Office / Office européen des brevets

(11) **EP 2 088 781 A1**

(12) **EUROPEAN PATENT APPLICATION**

(43) Date of publication:
**12.08.2009 Bulletin 2009/33**

(51) Int Cl.:
***H04N 7/24*** *(2006.01)*

(21) Application number: **09001447.3**

(22) Date of filing: **03.02.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(30) Priority: **08.02.2008 JP 2008028541** | (71) Applicant: **Sony Corporation**<br>**Tokyo 108-0075 (JP)**<br><br>(72) Inventor: **Komoriya, Yota**<br>**Tokyo (JP)**<br><br>(74) Representative: **Müller - Hoffmann & Partner**<br>**Patentanwälte**<br>**Innere Wiener Strasse 17**<br>**81667 München (DE)** |

(54) **Time-stamp addition apparatus, time-stamp addition method and time-stamp addition program**

(57) A time-stamp addition apparatus configured to add a time stamp to each individual one of a plurality of TS (Transport Stream) packets included in an MPEG2-TS (Moving Picture Experts Group 2 Transport Stream) to serve as a time stamp representing an input timing to supply the individual TS packet to a decoder configured to decode the MPEG2-TS, the time-stamp addition apparatus includes: a discontinuity detection section; a PCR detection section; a time-interval computation section; and a time-stamp computation section.

# F I G . 1

**Description**

CROSS REFERENCES TO RELATED APPLICATIONS

The present invention contains subject matter related to Japanese Patent Application JP 2008-028541 filed in the Japan Patent Office on February 8, 2008, the entire contents of which being incorporated herein by reference.

BACKGROUND OF THE INVENTION

1. Field of the Invention

In general, the present invention relates to a time-stamp addition apparatus, a time-stamp addition method and a time-stamp addition program. In particular, the present invention relates to a time-stamp addition apparatus capable of adding a time stamp, which allows an MPEG-2 TS (Moving Picture Experts Group Transport Stream) to be reproduced normally, to each TS (Transport Stream) packet included in the MPEG2-TS, and relates to a time-stamp addition method adopted by the time-stamp addition apparatus, as well as a time-stamp addition program implementing the time-stamp addition method.

2. Description of the Related Art

In recent years, TV-program digital apparatus have been becoming popular and becoming apparatus which are used widely. The TV-program digital apparatus is used for recording a TV program on a recording medium such as a hard disk and reproducing the TV program, which has been recorded on the recording medium, later. Typical TV-program digital apparatus include a hard-disk recorder, a personal computer and a TV-broadcast receiving apparatus having a recording function.

Standards set for TV broadcasts in Japan include MPEG (Moving Picture Experts Group) standards which are international standard specifications. In the MPEG standards, an MPEG-2 system considering applications to communication and broadcasting systems is adopted. In addition, in the MPEG-2 system, a format referred to as an MPEG2-TS is adopted. The MPEG2-TS format is a format applied to data transmissions and accumulations in an environment in which errors are generated during the transmissions.

In accordance with the MPEG2-TS format, an apparatus on the transmitting side, a video and a sound which have been coded by adoption of an MPEG-2 coding method is divided into packets and the packets are then sequentially transmitted to an apparatus on the receiving side. The packets are referred to as TS (Transport Stream) packets.

In addition, in accordance with the MPEG2-TS format, some TS packets include an embedded PCR (Program Clock Reference) taking a system clock frequency of 27 MHz as a reference so that the apparatus on the receiving side is capable of reproducing a program as intended by the apparatus on the transmitting side. By the same token, the TS packet also includes embedded data such a PTS (Program Time Stamp) and a DTS (Decoding Time Stamp). The PTS is time management information to be referenced in a reproduction process whereas the DTS is time management information to be referenced in a decoding process.

The receiving-side apparatus such as the digital apparatus described above receives TS packets from the apparatus on the transmitting side and retrieves a PAT (Program Association Table) as well as a PMT (Program Map Table) from predetermined ones of the TS packets. On the basis of the PAT and the PMT, the receiving-side apparatus identifies each PID (Packet Identifier) determined in advance, separating TS packets each identified by a PID determined in advance into a video packet, a sound, a PCR and other data.

In addition, the apparatus on the receiving side makes use of the PCR acquired from a TS packet in order to set the initial value of an STC (System Time Clock). Moreover, the apparatus on the receiving side compares the value of the PCR received periodically with the STC in order to adjust an error of the 27 MHz system clock frequency serving as a time base of the decoding process.

In general, the apparatus on the receiving side is designed so that, in a process carried out by the apparatus on the receiving side to decode a TS packet transmitted by the transmitting side apparatus such as a broadcasting station as a process to generate a video and a sound from the TS packet, a receiving buffer employed in the apparatus on the receiving side to serve as a buffer for storing data such as the TS packet on a temporary basis does not overflow or underflow and a process to synchronize the video and the sound with each other can be carried out normally.

By the way, in some cases, a video content having the MPEG2-TS format may be distributed by way of an IPTV (Internet Protocol Television) network or the like or distributed in home network environments which are represented by a DLNA (Digital Living Network Alliance) environment.

In the process to distribute a video content having the MPEG2-TS format by way of such a network, even if the apparatus on the transmitting side controls the output timings of the TS packets with a high degree of accuracy, it is quite within the bounds of possibility that the TS packets pass through different routes in the network so that the arrival times of the TS packets do not accord with the transmission intervals in some cases. On top of that, also if a relay apparatus in the network carries out another transmission process entirely unrelated to the MPEG2-TS process at the same time, the arrival times of the TS packets also do not accord with the transmission intervals in some cases.

In addition, the MPEG standards prescribe that at least one PCR is included within a period of 100 ms. That is to say, a PCR is not prescribed to be included in every TS packet of an MPEG2-TS. Thus, if the apparatus on the receiving side references only the PCRs of TS packets transmitted through a network, it will be difficult for the apparatus on the receiving side to supply a TS packet received with a timing expected by the apparatus on the transmitting side to a decoder employed in the apparatus on the receiving side to serve as a decoder for decoding the MPEG2-TS.

Thus, it is necessary to provide an effective solution to the difficulty. In accordance with the time-stamp addition method provided by the present embodiment, in the process to distribute a video content by way of such a network, the apparatus on the transmitting side adds a time stamp to every TS packet of an MPEG2-TS to serve as information indicating a timing with which the TS packet is to be supplied to the decoder whereas the apparatus on the receiving side makes use of the time stamp added to the TS packet in order to control the timing. In the following description, a timing with which the TS packet is to be supplied to the decoder is also referred to as an input timing.

For example, a content transmitted as a TV broadcast is recorded in an apparatus such as a recording apparatus as an MPEG2 TS and the user edits the MPEG2-TS, cutting scenes as well as changing the scene order so that the continuity of the PCR values is lost.

Changes of an input-timing interval between 2 specific successive TS packets and the PCR values of these specific TS packets are explained below. The specific TS packets are TS packets which lead ahead of and lag behind middle TS packets each already subjected to an edit process to cut scenes. Since the number of middle TS packets is reduced because scenes of middle TS packets are cut, the time interval between the 2 specific TS packets is shortened by a reduction corresponding to the reduction of the number of middle TS packets. However, the difference in PCR value between the specific TS packets is seen to increase considerably (or jumps) if compared with the reduced distance between the specific TS packets due to the cutting of the scenes.

Thus, in the case of an MPEG2-TS distributed to an apparatus on the receiving side through a network for example, if scenes of the MPEG2-TS are eliminated in an edit process to cut scenes and, then, only PCR values of the post-editing MPEG2-TS are used in processing to add time stamps to the post-editing MPEG2-TS on the receiving side, the difference in PCR value between the specific TS packets described above does not reflect the difference in correct input timing between the specific TS packets at all. As a result, the input timing to supply one of the specific TS packets to the decoder for decoding the MPEG2-TS also becomes completely incorrect as well. In addition, if an MPEG-2 TS is transmitted to an apparatus on the receiving side through a network and then subjected to an edit process to change the scene order of the MPEG2-TS, the input timing also becomes undesirably early or late so that the MPEG2-TS cannot be reproduced normally. As a result, a video represented by the MPEG2-TS is distorted undesirably.

In order to solve the problem described above, as disclosed in Japanese Patent Laid-open No. 2001-285233, there is provided a technology for generating transport streams transmitted at a variety of transmission speeds while sustaining continuity and a periodical characteristic which are indicated by time information.

In addition, Japanese Patent Laid-open No. Hei 11-41193 discloses a technology for eliminating delay variations which are generated when a plurality of asynchronous transport streams are multiplexed.

SUMMARY OF THE INVENTION

As described above, if the user edits an MPEG2-TS, the proper continuity of PCR values included in the TS packets of the MPEG2-TS obtained as a result of the editing operation is lost. Thus, if time-stamp addition processing is carried out by making use of the PCR values in order to add a time stamp to every TS packet of the MPEG2-TS to serve as a time stamp representing an input timing to supply the TS packet to a decoder for decoding the MPEG2-TS, the time stamps each obtained as a result of the time-stamp addition processing may not be correct in some cases. That is to say, the time stamps each added to a TS packet may no longer represent proper input timings in some cases. Thus, in an operation to reproduce an MPEG-2 TS transmitted through a network and edited by the user, the MPEG2-TS cannot be reproduced normally in some cases because the input timings each represented by a time stamp obtained as a result of the time-stamp addition processing carried out after the editing operation may be different from the correct input timing.

Addressing the problem described above, the present embodiment has been innovated as a present embodiment capable of adding a correct time stamp to each TS packet of an MPEG2-TS to serve as a time stamp that allows the MPEG2-TS to be reproduced normally.

In accordance with an embodiment of the present invention, there is provided a time-stamp addition apparatus configured to add a time stamp to each individual one of a plurality of TS packets included in an MPEG2-TS to serve as a time stamp representing an input timing to supply the individual TS packet to a decoder configured to decode the MPEG2-TS. The time-stamp addition apparatus employs a discontinuity detection section configured to acquire information on the position of a TS packet including a discontinuity indicator in case the discontinuity indicator included in the adaptation field of the TS packet indicates that PCRs (Program Clock References) taking a system clock frequency determined in advance as a reference are not properly continuous. The time-stamp addition apparatus further employs a PCR detection section configured to extract the value of a PCR embedded in the adaptation field of a TS packet and acquire information on the position of the TS packet including the embedded PCR in case the TS packet includes the adaptation field and the adaptation field of the TS packet includes the PCR. The time-stamp addition apparatus still further employs a time-interval computation section configured to compute an average input-timing interval between the input timings of every two adjacent TS packets by making use of information acquired by the discontinuity detection section as the information on the position of a specific TS packet including a discontinuity indicator described as a discontinuity indicator indicating that the PCRs are not properly continuous, making use of a value extracted by the PCR detection section as the value of a PCR, and making use of information acquired by the PCR detection section as the information on the position of the particular TS packet including the embedded PCR. The time-stamp addition apparatus still further employs a time-stamp computation section configured to compute the input timing of each of the TS packets on the basis of an average input-timing interval between the input timings of every two adjacent TS packets and add the time stamp to each of the TS packets to serve as a time stamp representing the input timing of the TS packet.

In accordance with another embodiment of the present invention, there is provided a time-stamp addition method for adding a time stamp and a time-stamp addition program to be executed by a computer for carrying out processing to add a time-stamp to each individual one of a plurality of TS packets included in an MPEG2-TS to serve as a time stamp representing an input timing to supply the individual TS packet to a decoder configured to decode the MPEG2-TS. The time-stamp addition method and program includes the step of acquiring information on the position of a TS packet including a discontinuity indicator described in an adaptation field of the TS packet in case the TS packet indicates that PCRs (Program Clock References) taking a system clock frequency determined in advance as a reference are not properly continuous. The time-stamp addition method and program further includes the step of extracting the value of a PCR of a TS packet and acquiring information on the position of the TS packet including the embedded PCR in case the TS packet includes the adaptation field and the adaptation field of the TS packet including the embedded PCR. The time-stamp addition method and program still further includes the step of computing an average input-timing interval between the input timings of every two adjacent TS packets by making use of information on the position of a specific TS packet including a discontinuity indicator indicating that the PCRs are not properly continuous, making use of the value of a PCR, and making use of the information on the position of the particular TS packet including the embedded PCR. The time-stamp addition method and program still further includes the step of computing the input timing of each of the TS packets on the basis of the average input-timing interval computed at the time-interval of every two adjacent TS packets and adding the time stamp to each of the TS packets to serve as a time stamp representing the input timing of the TS packet.

In accordance with the embodiments of the present invention, if a discontinuity indicator described in the adaptation field of a TS packet indicates that PCRs (Program Clock References) taking a system clock frequency determined in advance as a reference are not properly continuous, information on the position of the TS packet including the discontinuity indicator described in the adaptation field thereof is acquired. Then, if the adaptation field of a TS packet includes an embedded PCR, the value of the PCR embedded in the adaptation field of the TS packet is extracted and information on the position of the TS packet having the adaptation field including the embedded PCR is acquired. Subsequently, an average input-timing interval between the input timings of every two adjacent TS packets is computed by making use of the information on the position of a specific TS packet including a discontinuity indicator described in the adaptation field of the TS packet as a discontinuity indicator indicating that PCRs are not properly continuous, making use of the extracted value of a PCR, and making use of the information on the position of the particular TS packet. Finally, an input timing of each of the TS packets is computed on the basis of average input-timing intervals each computed as an average input-timing interval between the input timings of every two adjacent TS packets, and a time stamp is added to each of the TS packets to serve as a time stamp representing the input timing of the TS packet.

In accordance with the embodiments of the present invention, it is possible to add a time stamp to each TS packet of an MPEG2-TS to serve as a time stamp that allows the MPEG2-TS to be reproduced normally.

BRIEF DESCRIPTION OF THE DRAWINGS

Fig. 1 is a block diagram showing a typical configuration of an embodiment implementing a time-stamp addition apparatus to which the present embodiment is applied;
Fig. 2 is a plurality of diagrams each showing a typical configuration of an MPEG2-TS;
Fig. 3 shows an explanatory flowchart to be referred to in description of processing of time-stamp addition apparatus to add time stamps to the MPEG2-TS;

Fig. 4 shows an explanatory flowchart to be referred to in description of PCR detection process;

Fig. 5 is a diagram showing the configuration of the processing to compute input-timing intervals and time stamps; and

Fig. 6 is a block diagram showing a typical hardware configuration of a computer implemented by the embodiment.

DETAILED DESCRIPTION OF THE PRFEFERRED EMBODIMENT

By referring to the diagrams of the figures, the following description explains details of a preferred concrete embodiment implementing a time-stamp addition apparatus to which the present embodiment is applied.

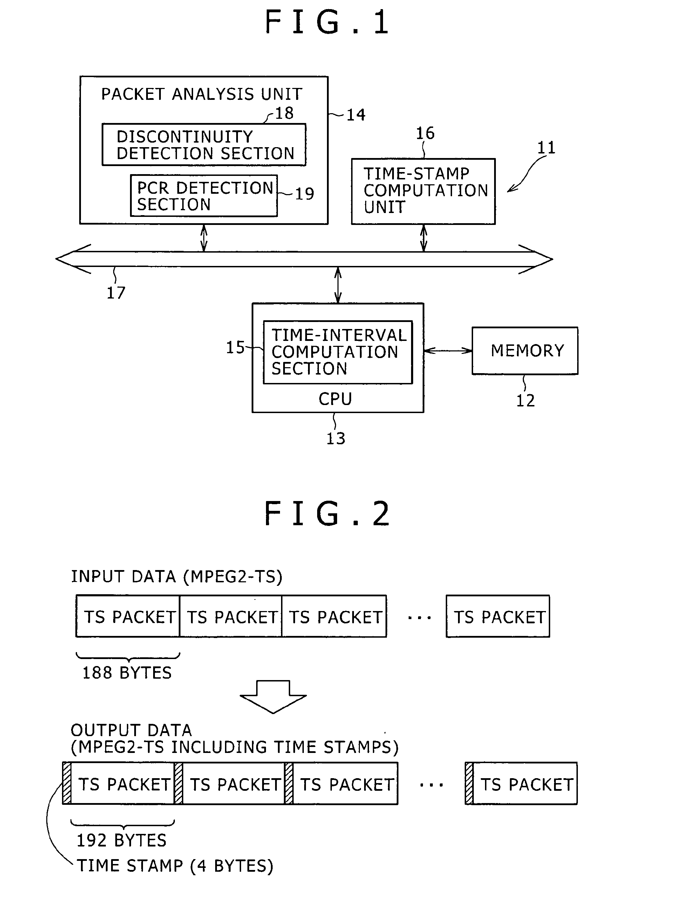

Fig. 1 is a block diagram showing a typical configuration of an embodiment implementing a time-stamp addition apparatus 11 to which the present embodiment is applied.

As shown in the block diagram of Fig. 1, the typical configuration of the embodiment implementing the time-stamp addition apparatus 11 includes a memory 12, a CPU (Central Processing Unit) 13, a packet analysis unit 14, a time-interval computation section 15, a time-stamp computation unit 16 and a system bus 17.

The CPU 13 is connected to the memory 12. The CPU 13, the packet analysis unit 14 and the time-stamp computation unit 16 are connected to each other by the system bus 17. In addition, a capability of a time-interval computation section 15 is realized by the CPU 13 to implement software.

The memory 12 is used for storing in advance an MPEG2-TS which serves as the subject of processing to add a time stamp to each of TS packets composing the MPEG2-TS. In the following description, the MPEG2-TS serving as the subject of processing to add a time stamp to each of TS packets composing the MPEG2-TS is referred to as a timestampless MPEG2-TS which is an MPEG2-TS including no time stamps. The memory 12 is also used for storing an MPEG2-TS obtained as a result of the processing to add a time stamp to each of TS packets composing the MPEG2-TS including no time stamps.

The CPU 13 reads out the MPEG2-TS including no time stamps from the memory 12 and supplies the MPEG2-TS including no time stamps to the packet analysis unit 14 by way of the system bus 17.

The packet analysis unit 14 is a hardware functional block which employs a discontinuity detection section 18 and a PCR detection section 19. The packet analysis unit 14 sequentially analyzes TS packets of the timestampless MPEG2-TS received from the CPU 13 by starting the analysis with a head TS packet located at the beginning of the MPEG2-TS including no time stamps.

For example, the packet analysis unit 14 analyzes the PAT (Program Association Table) shown in a predetermined TS packet included in the MPEG2-TS including no time stamps. The predetermined TS packet is a TS packet having a PID (Packet Identifier) of 0. Then, the packet analysis unit 14 detects the other TS packet identified by the PID found in the search process and analyzes the PMT included in the other TS packet in order to search the PMT for special PIDs each referred to as a PCR_PID used for indentifying a further TS packet which includes an embedded PCR to serve as an attribute TS packet. Thus, the packet analysis unit 14 is capable of detecting the attribute TS packet which is a TS packet including an embedded PCR.

As an alternative, the memory 12 is used for storing in advance the PID of the other TS packet which includes the PMT. Thus, the packet analysis unit 14 is capable of detecting attribute TS packets which each include an embedded PCR. As another alternative, the memory 12 is used for storing in advance PCR_PIDs each used for indentifying an attribute TS packet which includes an embedded PCR. Thus, also in this case, the packet analysis unit 14 is capable of detecting attribute TS packets which each include an embedded PCR. As a further alternative, the user is allowed to specify the PID of the other TS packet including the PMT or the PCR_PID indentifying an attribute TS packet which includes an embedded PCR. As a still further alternative, an application program executed by the CPU 13 arbitrarily sets the PID of the other TS packet including the PMT or the PCR_PID indentifying an attribute TS packet which includes an embedded PCR.

Then, the packet analysis unit 14 analyzes the further TS packet, which is a TS packet identified by the PCR_PID as a TS packet including an embedded PCR to serve as an attribute TS packet or a TS packet having the PCR_PID as the PID thereof, in order to produce a result of determination as to whether or not the attribute TS packet includes an adaptation field for describing additional information on the MPEG2-TS. To put it in detail, the packet analysis unit 14 produces a result of determination as to whether or not the value of adaptation_field_control is 10 (or 11) and the value of adaptation_field_length is 0.

In addition, as the packet analysis unit 14 completes the analysis carried out on all TS packets included in the MPEG2-TS received from the CPU 13, the packet analysis unit 14 transmits a message, which notifies the CPU 13 that the analysis has been completed, to the CPU 13 by way of the system bus 17.

If the determination result produced by the packet analysis unit 14 indicates that the attribute TS packet includes the adaptation field described above, the discontinuity detection section 18 employed in the packet analysis unit 14 processes the attribute TS packet by examining the value of a discontinuity indicator included in the adaptation field. If the value of the discontinuity indicator is found to be 1, the discontinuity detection section 18 acquires information on the position of the attribute TS packet. As typical information on the position of the attribute TS packet having a discontinuity indicator set at 1, it is possible to make use of the number of TS packets between an attribute TS packet detected immediately before as a TS packet identified by a PCR_PID and the attribute TS packet with an adaptation field including a discontinuity indicator set at 1.

Then, the discontinuity detection section 18 supplies the information on the position of the attribute TS packet having a discontinuity indicator set at 1 to the CPU 13 by way of the system bus 17. For example, each time the discontinuity detection section 18 detects an attribute TS packet having a discontinuity indicator set at 1, the discontinuity detection section 18 supplies the information on the position of the attribute TS packet to the CPU 13. As an alternative, as the discontinuity detection section 18 completes the analysis carried out on all attribute TS packets included in the MPEG2-TS received from the CPU 13, the packet analysis unit 14 transmits a message, which notifies the CPU 13 that the analysis has been completed, to the CPU 13 by way of the system bus 17 and supplies the information on the position of each attribute TS packet having a discontinuity indicator set at 1 to the CPU 13.

If a PCR value included in the following attribute TS packet has been reset, the discontinuity indicator included in the adaptation field of the following attribute TS packet is set at 1 as prescribed in the ISO/IEC 1318-1 : 2000 (E).

By the way, if the value of the discontinuity indicator included in the adaptation field of a specific attribute TS packet included in the MPEG2-TS as a TS packet including an embedded PCR is 1 for example, the decoder carries out a decoding process by making use of an average input-timing interval obtained for TS packets between the specific attribute TS packet and an attribute TS packet immediately leading ahead of the specific attribute TS packet as a TS packet including an immediately preceding PCR till the appearance of an attribute TS packet including an immediately succeeding PCR to serve as a new time base or a new average input-timing interval. In addition, the discontinuity indicator is sustained at 1 as it is till the appearance of the attribute TS packet including a PCR to serve as a new time base.

A PCR detection section 19 employed in the packet analysis unit 14 processes an attribute TS packet determined by the packet analysis unit 14 as a TS packet including an adaptation field in order to produce a result of determination as to whether the value of PCR_flag is 1 indicating that a PCR value is described in an optional field of the adaptation field of the attribute TS packet. The PCR_flag is a flag used for indicating whether or not a PCR value is described in the optional field. If the result of the determination indicates that the value of PCR_flag is 1, the PCR detection section 19 extracts the PCR value from the attribute TS packet and acquires information on the position of the attribute TS packet. As typical information on the position of the attribute TS packet, it is possible to make use of the number of TS packets located between the head packet located at the beginning of the MPEG2-TS and the attribute TS packet if the attribute TS packet is the first attribute TS packet from which a PCR is retrieved from the MPEG2-TS, the number of TS packets located between the attribute TS packet and the tail TS packet located at the end of the MPEG2-TS if the attribute TS packet is the last attribute TS packet from which a PCR is retrieved from the MPEG2-TS or the number of TS packets located between an attribute TS packet immediately preceding the attribute TS packet and the attribute TS packet if the attribute TS packet is neither the first attribute TS packet nor the last attribute TS packet in the MPEG2-TS.

Then, the PCR detection section 19 supplies the PCR value extracted from the attribute TS packet having the PCR_flag set at 1 and the information on the position of the attribute TS packet to the CPU 13 by way of the system bus 17. For example, each time the PCR detection section 19 detects an attribute TS packet having the PCR_flag set at 1, the PCR detection section 19 supplies the PCR value extracted from the attribute TS packet and the information on the position of the attribute TS packet to the CPU 13. As an alternative, as the discontinuity detection section 18 completes the analysis carried out on all attribute TS packets included in the MPEG2-TS received from the CPU 13, the packet analysis unit 14 transmits a message, which notifies the CPU 13 that the analysis has been completed, to the CPU 13 by way of the system bus 17 and supplies the information on the positions of the attribute TS packets each having the discontinuity indicator set at 1 as described above. At that time, the PCR detection section 19 supplies a PCR value extracted from each TS packet having the PCR_flag set at 1 and the information on the position of each of such TS packets to the CPU 13.

The time-interval computation section 15 of the CPU 13 computes quantities such as an average input-timing interval between every two adjacent TS packets on the basis of information received by the CPU 13 from the discontinuity detection section 18 as the information on the position of each attribute TS packet having a discontinuity indicator set at 1, information received by the CPU 13 from the PCR detection section 19 as the information on the position of each attribute TS packet having a PCR_flag set at 1 and values each received by the CPU 13 from the PCR detection section 19 as the PCR value of an attribute TS packet having a PCR_flag set at 1. The average input-timing interval is for example an average interval between the input timings of every two adjacent TS packets. The input timing of a TS packet is a time with which the TS packet is supplied to a decoder configured to decode the MPEG2-TS including the TS packet. The time-interval computation section 15 then generates time-interval data including the computed average input-timing interval. Subsequently, the CPU 13 supplies the time-interval data generated by the time-interval computation section 15 and the timestampless MPEG2-TS read out from the memory 12 to the time-stamp computation unit 16 by way of the system bus 17.

In accordance with a formula determined in advance, the time-stamp computation unit 16 derives a time stamp having a typical length of 4 bytes for every TS packet by making use of the time-interval data received from the CPU 13. Then, the time-stamp computation unit 16 adds every time stamp computed for a TS packet to the TS packet included in the timestampless MPEG2-TS received from the CPU 13 in order to generate an MPEG2-TS including time stamps. Subsequently, the time-stamp computation unit 16 supplies the MPEG2-TS including time stamps to the CPU 13 by way of the system bus 17. Finally, the CPU 13 stores back the MPEG2-TS including time stamps in the memory 12.

Fig. 2 is a plurality of diagrams each showing a typical configuration of an MPEG2-TS.

A diagram on the upper side of Fig. 2 shows a timestampless MPEG2-TS stored in advance in the memory 12 as a TS to be processed by the time-stamp addition apparatus 11 whereas a diagram on the lower side of Fig. 2 shows an MPEG2-TS obtained as a result of the processing carried out by the time-stamp addition apparatus 11 to add a time stamp to every TS packet included in the MPEG2-TS including no time stamps.

As shown in the diagram on the upper side of Fig. 2, the MPEG2-TS with no time stamps includes a plurality of consecutive TS packets each having a length of 188 bytes. As shown in the diagram on the lower side of Fig. 2, on the other hand, every TS packet included in the MPEG2-TS including time stamps has a length of 192 bytes including 4 bytes forming a time-stamp added to beginning of the TS packet. Much like the MPEG2-TS including no time stamps, the MPEG2-TS including time stamps has a plurality of consecutive TS packets each having a length of 192 bytes.

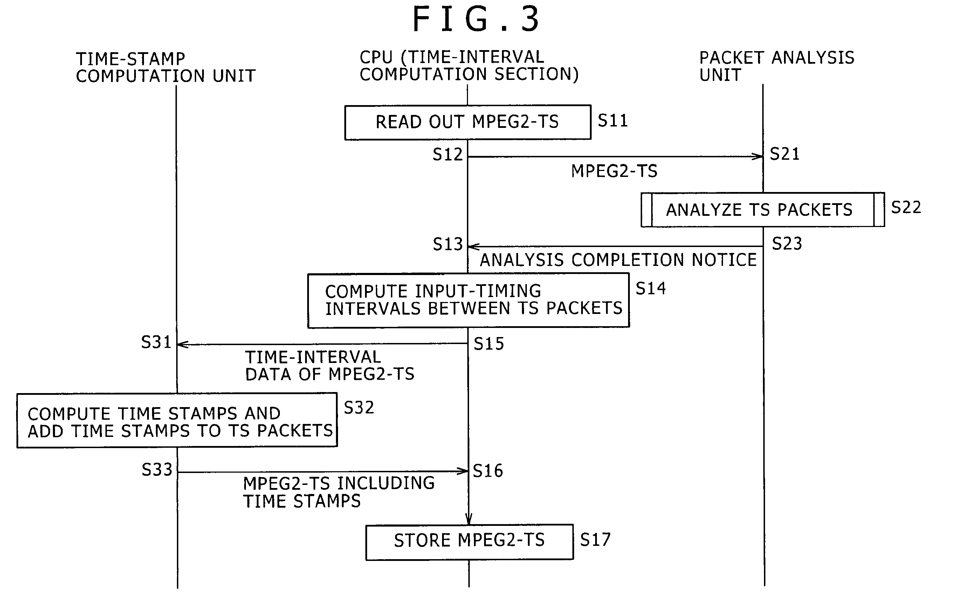

Fig. 3 shows an explanatory flowchart referred to in description of processing carried out by the time-stamp addition apparatus 11 to add a time stamp to every TS packet of an MPEG2-TS initially including no time stamps.

In an initial state, an MPEG2-TS including no time stamps has been stored in the memory 12. At a step S11, the CPU 13 reads out the MPEG2-TS including no time stamps from the memory 12. Then, the time-stamp addition apparatus 11 continues the processing from the step S11 to a step S12.

At the step S12, the CPU 13 supplies the timestampless MPEG2-TS read out from the memory 12 at the step S11 to the packet analysis unit 14. Then, the CPU 13 puts the processing in a state of waiting for an analysis completion notice to be supplied by the packet analysis unit 14. As the analysis completion notice is received from the packet analysis unit 14, the time-stamp addition apparatus 11 continues the processing from the step S12 to a step S13.

At the step S13, the CPU 13 receives the analysis completion notice from the packet analysis unit 14. In addition, as described above, the CPU 13 receives not only the analysis completion notice from the packet analysis unit 14, but also information on the position of every attribute TS packet with the discontinuity indicator thereof set at 1 from the discontinuity detection section 18. On top of that, the CPU 13 also receives information on the position of every attribute TS packet with the PCR_flag thereof set at 1 and the PCR value of each of such attribute TS packets from the PCR detection section 19.

Then, the time-stamp addition apparatus 11 continues the processing from the step S13 to a step S14. At the step S14, the time-interval computation section 15 of the CPU 13 computes quantities such as an average input-timing interval between every two adjacent TS packets on the basis of information received by the CPU 13 from the discontinuity detection section 18 as the information on the position of each attribute TS packet having a discontinuity indicator set at 1, information received by the CPU 13 from the PCR detection section 19 as the information on the position of each attribute TS packet having a PCR_flag set at 1 and values each received by the CPU 13 from the PCR detection section 19 as the PCR value of an attribute TS packet having a PCR_flag set at 1. The time-interval computation section 15 then generates time-interval data including the computed average input-timing interval.

Subsequently, the time-stamp addition apparatus 11 continues the processing from the step S14 to a step S15. At the step S15, the CPU 13 supplies the time-interval data generated by the time-interval computation section 15 and the timestampless MPEG2-TS read out from the memory 12 to the time-stamp computation unit 16 by way of the system bus 17. Then, the CPU 13 puts the processing in a state of waiting for an MPEG2-TS including time stamps to be supplied by the time-stamp computation unit 16. As the MPEG2-TS including time stamps is supplied by the time-stamp computation unit 16, the time-stamp addition apparatus 11 continues the processing from the step S15 to a step S16.

At the step S16, the CPU 13 receives the MPEG2-TS including time stamps from the time-stamp computation unit 16. Then, the time-stamp addition apparatus 11 continues the processing from the step S16 to a step S17.

At the step S17, the CPU 13 stores a TS received from the time-stamp computation unit 16 at the step S16 as the MPEG2-TS including time stamps into the memory 12. Finally, the time-stamp addition apparatus 11 ends the processing carried out by the CPU 13.

While the CPU 13 supply the timestampless MPEG 2-TS at a step S12, the packet analysis unit 14 receives the timestampless MPEG2-TS which is supplied by the CPU 13 at the step S21.

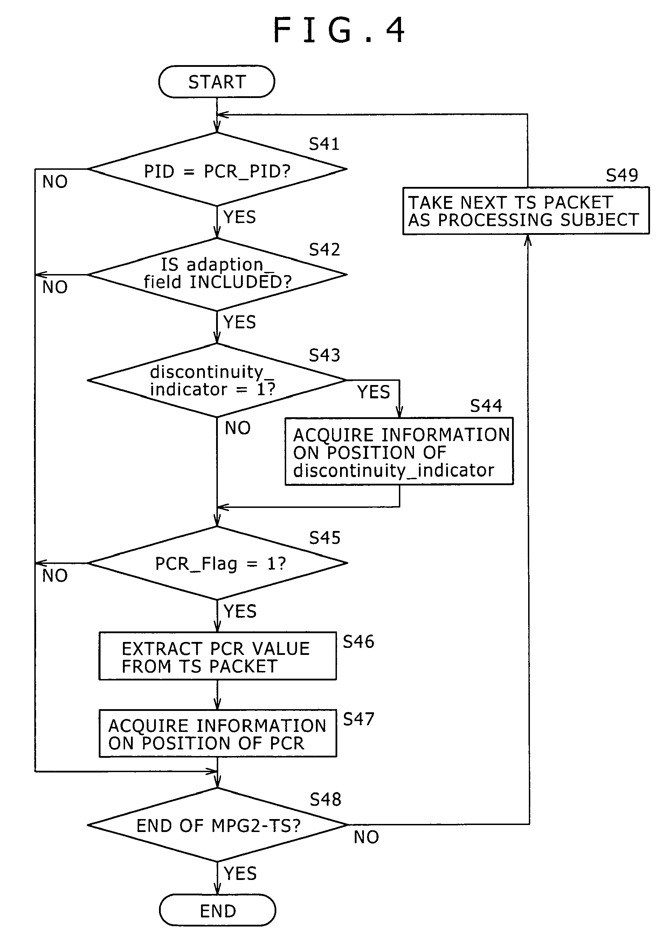

Then, the time-stamp addition apparatus 11 continues the processing from the step S21 to a step S22. At the step S22, the packet analysis unit 14 carries out packet analysis processing to analyze the MPEG2-TS including no time stamps in accordance with a flowchart shown in Fig. 4 as a flowchart to be described later. In the packet analysis processing, the discontinuity detection section 18 acquires the information on the position of each attribute TS packet having a discontinuity indicator set at 1 whereas the PCR detection section 19 acquires the information on the position of each attribute TS packet having a PCR_flag set at 1 and the PCR value of each of attribute TS packets each having a PCR_flag set at 1.

Then, the time-stamp addition apparatus 11 continues the processing from the step S22 to a step S23. At the step S23, the packet analysis unit 14 provides the CPU 13 with an analysis completion notice, the information on the position of each attribute TS packet having a discontinuity indicator set at 1, the information on the position of each attribute TS packet having a PCR_flag set at 1 and the PCR value of each of attribute TS packets each having a PCR_flag set at 1. Finally, the time-stamp addition apparatus 11 ends the processing carried out by the packet analysis unit 14.

In addition, while the CPU 13 is carrying out the processing described above, at a step S31, the time-stamp computation unit 16 receives the timestampless MPEG2-TS and the time-interval data which are supplied by the CPU 13 at the step S15.

Then, the time-stamp addition apparatus 11 continues the processing from the step S31 to a step S32. At the step S32, in accordance with a formula determined in advance, the time-stamp computation unit 16 derives a time stamp having a typical length of 4 bytes for every TS packet by making use of the time-interval data received from the CPU 13 at the step S31. Then, the time-stamp computation unit 16 adds every time stamp computed for a TS packet to the TS packet included in the timestampless MPEG2-TS received from the CPU 13 at the step S31 in order to generate an MPEG2-TS including time stamps as shown in the diagrams of Fig. 2. Subsequently, the time-stamp addition apparatus 11 continues the processing from the step S32 to a step S33.

At the step S33, the time-stamp computation unit 16 supplies a TS generated at the step S32 as the MPEG2-TS including time stamps to the CPU 13 by way of the system bus 17. Finally, the time-stamp addition apparatus 11 ends the processing carried out by the time-stamp computation unit 16.

Fig. 4 shows an explanatory flowchart referred to in description of the packet analysis processing carried out by the packet analysis unit 14 at the step S22 of the flowchart shown in Fig. 3.

The packet analysis processing is carried out by the packet analysis unit 14 sequentially on TS packets of the timestampless MPEG2-TS, which is received from the CPU 13 to serve as the subject of the processing, starting with the head TS packet located at the beginning of the MPEG2-TS as follows. First of all, at a step S41, the packet analysis unit 14 produces a result of determination as to whether or not the PID of a TS packet serving as the subject of the processing is a PCR_PID which is a PID indicating that the TS packet includes a PCR to serve as an attribute TS packet.

If the determination result produced in the process carried out by the packet analysis unit 14 at the step S41 indicates that the PID of a TS packet serving as the subject of the processing is a PCR_PID, the packet analysis unit 14 continues the processing from the step S41 to a step S42.

At the step S42, the packet analysis unit 14 produces a result of determination as to whether or not the TS packet determined in the process carried out at the step S41 to be an attribute TS packet, which is a TS packet having a PCR_PID, includes an adaptation field. If the determination result produced in the process carried out by the packet analysis unit 14 at the step S42 indicates that the TS packet having a PCR_PID includes an adaptation field, the packet analysis unit 14 continues the processing from the step S42 to a step S43.

At the step S43, the discontinuity detection section 18 produces a result of determination as to whether or not the adaptation field of the attribute TS packet determined in the process carried out by the packet analysis unit 14 at the step S42 to be an attribute TS packet including an adaptation field includes a discontinuity indicator set at 1.

If the determination result produced in the process carried out by the discontinuity detection section 18 at the step S43 indicates that the adaptation field of the attribute TS packet determined in the process carried out at the step S42 to be an attribute TS packet including an adaptation field includes a discontinuity indicator set at 1, the packet analysis unit 14 continues the processing from the step S43 to a step S44.

At the step S44, the discontinuity detection section 18 acquires information on the position of the attribute TS packet with an adaptation field including a discontinuity indicator set at 1. For example, the discontinuity detection section 18 acquires information on the position of the attribute TS packet by counting the number of TS packets between an attribute TS packet detected immediately before as a TS packet identified by a PCR_PID and the attribute TS packet with an adaptation field including a discontinuity indicator set at 1. Then, as the information on the position of the attribute TS packet with an adaptation field including a discontinuity indicator set at 1, the discontinuity detection section 18 makes use of the number of TS packets between an attribute TS packet detected immediately before as a TS packet identified by a PCR_PID and the attribute TS packet with an adaptation field including a discontinuity' indicator set at 1.

Then, the packet analysis unit 14 continues the processing from the step S44 to a step S45. The packet analysis unit 14 also continues the processing from the step S43 directly to the step S45 if the determination result produced in the process carried out by the discontinuity detection section 18 at the step S43 indicates that the adaptation field of the attribute TS packet determined in the process carried out at the step S42 to be an attribute TS packet including an adaptation field includes a discontinuity indicator set at a value other than 1.

At the step S45, the PCR detection section 19 produces a result of determination as to whether the value of the PCR_flag of the attribute TS packet determined in the process carried out by the packet analysis unit 14 at the step S42 to be a TS packet including an adaptation field is 1 indicating that a PCR value is described in an optional field of the adaptation field of the attribute TS packet. As described earlier, the PCR_flag is a flag used for indicating whether or not a PCR value is described in the optional field.

If the determination result produced in the process carried out by the PCR detection section 19 at the step S45 indicates that the value of the PCR_flag included in the attribute TS packet as a flag used for indicating whether or not a PCR value is described in the optional field of the adaptation field of the attribute TS packet is 1 indicating that a PCR value is described in the optional field, the packet analysis unit 14 continues the processing from the step S45 to a step S46. At the step S46, the PCR detection section 19 extracts the PCR value from the optional field of the adaptation field included in the attribute TS packet. Then, the packet analysis unit 14 continues the processing from the step S46 to a step S47.

At the step S47, the PCR detection section 19 acquires information on the position of the attribute TS packet determined in the process carried out by the PCR detection section 19 at the step S45 to be an attribute TS packet with the value of PCR_flag set at 1. For example, the PCR detection section 19 acquires information on the position of the attribute TS packet by counting the number of TS packets between an immediately preceding attribute TS packet determined previously to be an attribute TS packet with the value of PCR_flag set at 1 and this attribute TS packet determined in the process carried out by the PCR detection section 19 at the step S45 to be an attribute TS packet with the value of PCR_flag set at 1. Then, the PCR detection section 19 makes use of the number of TS packets as typical information on the position of this TS packet determined in the process carried out by the PCR detection section 19 at the step S45 to be an attribute TS packet with the value of PCR_flag set at 1.

Subsequently, the packet analysis unit 14 continues the processing from the step S47 to a step S48. The packet analysis unit 14 also continues the processing from the step S41 directly to the step S48 if the determination result produced in the process carried out by the packet analysis unit 14 at the step S41 indicates that the PID of a TS packet serving as the subject of the processing is not a PCR_PID. By the same token, the packet analysis unit 14 also continues the processing from the step S42 directly to the step S48 if the determination result produced in the process carried out by the packet analysis unit 14 at the step S42 indicates that the TS packet having a PCR_PID does not include an adaptation field. In the same way, the packet analysis unit 14 also continues the processing from the step S45 directly to the step S48 if the determination result produced in the process carried out by the PCR detection section employed in the packet analysis unit 14 at the step S45 indicates that the value of PCR_flag included in the attribute TS packet as a flag, which is used for indicating whether or not a PCR value is described in the optional field of the adaptation field of the attribute TS packet, is not 1, indicating that a PCR value is not described in the optional field.

At the step S48, the packet analysis unit 14 produces a result of determination as to whether or not all the TS packets each included in the MPEG2-TS, which is received from the CPU 13, to serve as the subject of the processing have been processed. If the packet analysis processing is carried out by the packet analysis unit 14 sequentially on the TS packets, starting with the head TS packet located at the beginning of the MPEG2-TS for example, the packet analysis unit 14 produces a result of determination as to whether or not the tail TS packet located at the end of the MPEG2-TS has been taken as the subject of the processing.

If the determination result produced in the process carried out by the packet analysis unit 14 at the step S48 indicates that not all the TS packets each included in the MPEG2-TS, the packet analysis unit 14 continues the processing from the step S48 to a step S49.

At the step S49, the packet analysis unit 14 takes a TS packet immediately following the TS packet serving as the current subject of the processing as the next subject of the processing. Then, the packet analysis unit 14 continues the processing from the step S49 directly back to the step S41, and the same process is repeated for new subject.

If the determination result produced in the process carried out by the packet analysis unit 14 at the step S48 indicates that all the TS packets each included in the MPEG2-TS, which is received from the CPU 13, to serve as the subject of the processing have been taken as the subject of the processing, on the other hand, the packet analysis unit 14 ends the processing.

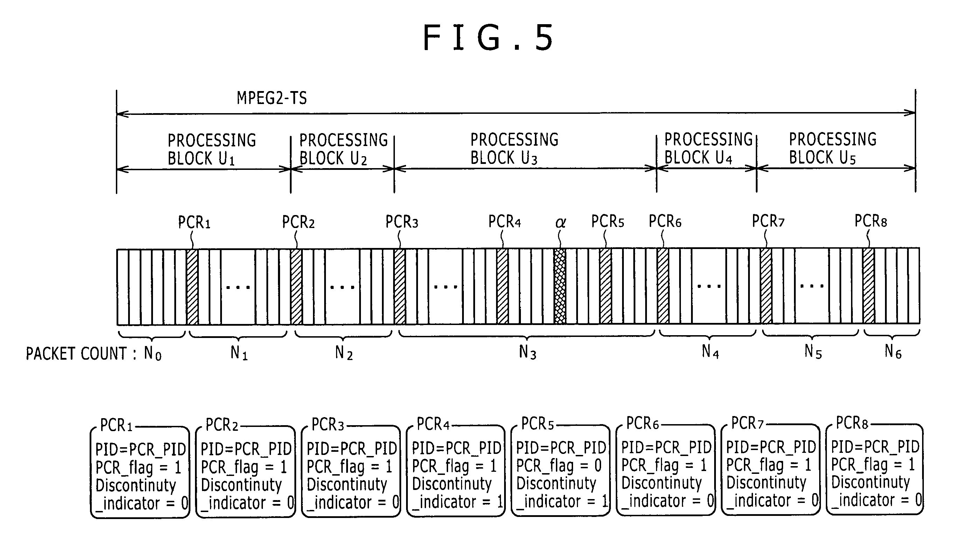

By referring to a diagram of Fig. 5, the following description explains processing carried out to compute the average input-timing interval and time stamp values.

Fig. 5 is a diagram showing the configuration of a typical MPEG2-TS which includes a plurality of successive TS packets.

In the diagram of Fig. 5, every TS packet hatched by inclined lines is a packet determined by the packet analysis unit 14 to be an attribute TS packet, the PID of which is the PCR_PID. As described earlier, a TS packet having the PCR_PID is a packet including an embedded PCR to serve as an attribute TS packet. In the case of the MPEG2-TS shown in the diagram of Fig. 5, each of 8 attribute TS packets, i.e. attribute TS packets $PCR_1$ to $PCR_8$ is an attribute TS packet including an embedded PCR. Let us assume for example that the user edits the MPEG2-TS to cut out a scene between a TS packet $\alpha$, which is shown in the diagram of Fig. 5 as a block hatched by dots and sandwiched by the attribute TS packets $PCR_4$, and $PCR_5$, and a TS packet immediately preceding the TS packet $\alpha$. Thus, scene switching represented by the TS packet $\alpha$.

Since the scene switching occurs in the TS packet $\alpha$ as described above, the discontinuity indicator of the attribute TS packet $PCR_4$ immediately leading ahead of the TS packet $\alpha$ as an attribute TS packet including a PCR is set at 1.

In the typical MPEG2-TS shown in the diagram of Fig. 5, the PCR_flag of an attribute TS packet $PCR_5$ immediately lagging behind the TS packet $\alpha$ has a value of 0 meaning that a PCR value is not included in the attribute TS packet $PCR_5$. Thus, the first attribute TS packet lagging behind the TS packet $\alpha$ as an attribute TS packet having the PCR_flag thereof set at 1 meaning that a PCR value is included in the attribute TS packet is an attribute TS packet $PCR_6$. Since the scene switching occurs in the TS packet $\alpha$ as described above, the PCR value included in the attribute TS packet $PCR_6$ is not properly continuous with respect to the PCR values included in TS packets each leading ahead of the attribute TS packet $PCR_4$ and with respect to the PCR value included the attribute TS packet $PCR_4$ itself. It is to be noted that, even though the attribute TS packet $PCR_5$ is a TS packet having the PCR_PID as the PID thereof, the PCR_flag of the attribute TS packet $PCR_5$ has a value of 0. Thus, the discontinuity indicator is set at 1.

As shown in the diagram of Fig. 5, the time-interval computation section 15 divides the MPEG2-TS into a plurality of processing blocks determined in advance. For each of the processing blocks, the time-interval computation section 15 computes an average input-timing interval between every two adjacent TS packets. In the typical MPEG2-TS shown in the diagram of Fig. 5, the time-interval computation section 15 divides the MPEG2-TS into a plurality of processing blocks $U_1$ to $U_5$. Thus, for each individual one of the processing blocks $U_1$ to $U_5$, the time-interval computation section 15 computes an average input-timing interval between every two adjacent TS packets in the individual processing block.

For example, the time-interval computation section 15 basically delimits two adjacent processing blocks from each other by making use of an attribute TS packet. The first processing block $U_1$ includes TS packets leading ahead of the first attribute TS packet $PCR_1$ whereas the last processing block $U_5$ includes TS packets lagging behind the last attribute TS packet $PCR_8$.

In addition, an attribute TS packet having a discontinuity indicator set at 1 is not used as a delimiter between two adjacent processing blocks. As shown in the diagram of Fig. 5, the processing block $U_3$ includes TS packets between the attribute TS packet $PCR_3$ having a discontinuity indicator set at 0 and an attribute TS packet TR6 which is located at a position lagging behind the attribute TS packet $PCR_3$ as a first attribute TS packet having a discontinuity indicator set at 0.

As described above, for each individual one of the processing blocks $U_1$ to $U_5$, the time-interval computation section 15 computes an average input-timing interval between every two adjacent TS packets in the individual processing block.

In the case of the first processing block $U_1$ including an attribute TS packet $PCR_1$ with a discontinuity indicator of 0 for example, the time-interval computation section 15 computes an average input-timing interval between every two adjacent TS packets in the first processing block $U_1$ on the basis of the PCR value of the attribute TS packet $PCR_1$, the PCR value of an attribute TS packet $PCR_2$ immediately lagging behind the first processing block $U_1$ and information on the position of the attribute TS packet $PCR_2$. The time-interval data generated in this way includes a uniform input-timing interval representing the average input-timing interval between every two adjacent TS packets sandwiched by the head TS packet located at the beginning of the MPEG2-TS and the attribute TS packet $PCR_1$ as well as the average input-timing interval between every two adjacent TS packets sandwiched by the attribute TS packets $PCR_1$ and $PCR_2$

In addition, for a middle processing block not including an attribute TS packet having a discontinuity indicator set at 1, the time-interval computation section 15 finds an average input-timing interval between every two adjacent TS packets in the processing block on the basis of the PCR value of an attribute TS packet serving as the front delimiter of the processing block and information on the position of the attribute TS packet immediately lagging behind the processing block. Then, the time-interval computation section 15 generates time-interval data. In the case of the second processing block $U_2$, the time-interval computation section 15 finds an average input-timing interval between every two adjacent TS packets in the second processing block $U_2$ on the basis of the PCR values of the front-delimiter attribute TS packet $PCR_2$ and the attribute TS packet $PCR_3$ as well as information on the position of the attribute TS packet $PCR_3$. The information on the position of the attribute TS packet $PCR_3$ is a TS-packet count $N_2$ representing the number of TS packets between the front-delimiter attribute TS packet $PCR_2$ and the attribute TS packet $PCR_3$, with the TS packets between the attribute TS packets $PCR_2$ and $PCR_3$ including the attribute TS packet $PCR_2$. By the same token, in the case of the fourth processing block $U_4$, the time-interval computation section 15 finds time-interval data for TS packets in the fourth processing block $U_4$ on the basis of the PCR values of the front-delimiter attribute TS packet $PCR_6$ and the attribute TS packet $PCR_7$ as well as information on the position of the attribute TS packet $PCR_7$.

In addition, the time-interval computation section 15 finds time-interval data for TS packets in the processing block on the basis of the PCR value of the front-delimiter attribute TS packet located at the beginning of the processing block, the PCR value of a specific attribute TS packet located at a position lagging behind the front-delimiter attribute TS packet as a first attribute TS packet from which the PCR value has been extracted after extraction of the PCR value from the front-delimiter attribute TS packet and information on the position of the specific attribute TS packet. In the case of the third processing block $U_3$, the time-interval computation section 15 finds time-interval data for TS packets in the third processing block $U_3$ on the basis of the PCR values of the front-delimiter attribute TS packet $PCR_3$ and the specific TS packet $PCR_4$ as well as information on the position of the attribute TS packet $PCR_4$. The information on the position of the specific attribute TS packet $PCR_4$ is the number of TS packets between the front-delimiter attribute TS packet $PCR_3$ and the specific attribute TS packet $PCR_4$, with the TS packets between the attribute TS packets $PCR_3$ and $PCR_4$ including the attribute TS packet $PCR_3$. The time-interval data found in this way includes a uniform input-timing interval representing the average input-timing interval between every two adjacent TS packets sandwiched by the specific attribute TS packet $PCR_4$ and an attribute TS packet $PCR_6$ immediately lagging behind the third processing block $U_3$ as well as the average input-timing interval between every two adjacent TS packets sandwiched by the front-delimiter attribute TS packet $PCR_3$ and the specific TS packet $PCR_4$.

In the case of the fifth processing block $U_5$, the time-interval computation section 15 finds time-interval data for TS packets in the processing block $U_5$ on the basis of the PCR value of the front-delimiter attribute TS packet $PCR_7$ of the processing block $U_5$, the PCR value of the last attribute TS packet $PCR_8$ and information on the position of the last attribute TS packet $PCR_8$. The information on the position of the last attribute TS packet $PCR_8$ is a TS-packet count $N_5$ representing the number of TS packets between the front-delimiter attribute TS packet $PCR_7$ and the last attribute TS packet $PCR_8$, with the TS packets between the attribute TS packets $PCR_7$ and $PCR_8$ including the attribute TS packet $PCR_7$. The time-interval data found in this way includes a uniform input-timing interval representing the average input-timing interval between every two adjacent TS packets sandwiched by the last attribute TS packet $PCR_8$ and the tail TS packet located at the end of the MPEG2-TS as well as the average input-timing interval between every two adjacent TS packets sandwiched by the front-delimiter attribute TS packet $PCR_7$ and the last attribute TS packet $PCR_8$.

As described above, the PCR detection section 19 extracts PCR values from attribute TS packets and finds information on the position of each of the attribute TS packets. Then, the time-interval computation section 15 generates time-interval data including an average input-timing interval computed on the basis of the PCR values and TS-packet counts.

Let reference notation $PCR_n$ denote the PCR value of an attribute TS packet $PCR_n$ in an nth processing block $U_n$ whereas reference notation $Q_n$ is an integer denoting the average input-timing interval between every two adjacent TS packets in the processing block $U_n$ where n = 1 to 5 for the typical MPEG2-TS shown in the diagram of Fig. 5. In this case, the average input-timing interval $Q_n$ is expressed by Eq. (1) as follows:

$$\bar{Q}_n = (P\bar{C}R_{n+1} - PCR_n) / N_n \quad \text{... (1)}$$

In the above equation, reference notation $N_n$ denotes a TS-packet count used as information on the position of the attribute TS packet $PCR_{n+1}$ in the computation of the average input-timing interval $Q_n$ included in the time-interval data as the average input-timing interval $Q_n$ between every two adjacent TS packets in the nth processing block $U_n$. Let reference notation Rn denote a remainder of a division operation expressed by the expression on the right-hand side of Eq. (1) used for finding the average input-timing interval $Q_n$ between every two adjacent TS packets in the nth processing block $U_n$. In this case, the remainder Rn is expressed by Eq. (2) as follows:

$$R_n = (PCR_{n+1} - PCR_n) \bmod N_n \quad \text{... (2)}$$

Symbol mod used in Eq. (2) is the operator of an operation to find a remainder obtained as a result of dividing an operand on the left-hand side of the operator mod by an operand on the right-hand side of the operator mod. In the case of Eq. (2), the operand on the left-hand side of the operator mod is the difference $(PCR_{n+1} - PCR_n)$ whereas the operand on the right-hand side of the operator mod is the TS-packet count $N_n$.

Let reference notation $V_{n[m]}$ denote the time stamp value of the mth TS packet in the nth processing block $U_n$.

First of all, the time stamp value $V_{1[1]}$ of the first TS packet in the first processing block $U_1$ is set at an arbitrary value. It is to be noted that the average input-timing interval $Q_1$ in the first processing block $U_1$ is $(PCR_2 - PCR_1) / N_1$ whereas the remainder $R_1$ for the first processing block $U_1$ is $(PCR_2 - PCR_1) \bmod N_1$.

Then, the time stamp value $V_{2[1]}$ of the first TS packet in the second processing block $U_2$ is computed in accordance with Eq. (3) as follows.

$$V_{2[1]} = V_{1[1]} + Q_1 (N_0 + N_1) + (R_1 (N_0 + N_1) + C_{1[1]}) / N_1$$
$$= V_{1[1]} + \{ (PCR_2 - PCR_1) \times (N_0 + N_1) + C_{1[1]} \} / N_1$$

$$\ldots (3)$$

Reference notation $C_{1[1]}$ used in Eq. (3) denotes a carry-over of the time stamp value $V_{1[1]}$ of the first TS packet in the first processing block $U_1$. The carry-over $C_{1[1]}$ is expressed by Eq. (4) as follows.

$$C_{1[1]} = (-R_1 \times N_0) \bmod N_1 \qquad \ldots (4)$$

It is to be noted that the carry-over $C_{n[1]}$ of the time stamp value $V_{n[1]}$ of the first TS packet in each of processing blocks $U_n$ where $n \geq 2$ (that is, the carry-over $C_{n[1]}$ of the time stamp value $V_{n[1]}$ of each of the first TS packet in the processing block $U_2$ and processing blocks lagging behind the processing block $U_2$) is 0. In addition, the average input-timing interval $Q_2$ in the second processing block $U_2$ is $(PCR_3 - PCR_2) / N_2$ whereas the remainder $R_2$ for the second processing block $U_2$ is $(PCR_3 - PCR_2) \bmod N_2$.

The time stamp value $V_{n[1]}$ of the first TS packet in each of the processing blocks $U_n$ where $n \geq 3$ is expressed by Eq. (5) as follows:

$$V_{n[1]} = V_{n-1[1]} + (PCR_n - PCR_{n-1}) \qquad \ldots (5)$$

The time-interval computation section 15 carries out processing based on Eqs. (1) to (5) in order to compute the average input-timing interval $Q_n$ in the processing block $U_n$, the remainder $R_n$ for the processing block $U_n$ and the time stamp value $V_{n[1]}$ of the first TS packet in the processing block $U_n$ for each of the processing blocks. Then, the time-interval computation section 15 generates time-interval data to include the average input-timing intervals $Q_n$, the remainders $R_n$ and the time stamp values $V_{n[1]}$, supplying the time-interval data to the time-stamp computation unit 16.

On the basis of the time-interval data generated by the time-interval computation section 15, the time-stamp computation unit 16 is capable of adding a proper time stamp to every TS packet between the head PS packet located at the beginning of the MPEG2-TS and the first attribute TS packet from which the first PCR value is extracted as well as every TS packet between the last attribute TS packet from which the last PCR value is extracted and the tail PS packet located at the end of the MPEG2-TS. In the case of the typical MPEG2-TS shown in the diagram of Fig. 5, the first attribute TS packet from which the first PCR value is extracted is the attribute TS packet $PCR_1$ whereas the last attribute TS packet from which the last PCR value is extracted is the attribute TS packet $PCR_8$.

Also in the case of a processing block in which the time base changes (that is, in the third processing block $U_3$ including the TS packet $\alpha$ in the MPEG2-TS shown in the diagram of Fig. 5), the average input-timing interval is found in a way similar to the way to find the average input-timing interval. That is to say, in the third processing block $U_3$, a uniform average input-timing interval is used as the average input-timing interval between every two adjacent TS packets sandwiched by the attribute TS packets $PCR_4$ and $PCR_6$ as well as the average input-timing interval between every two adjacent the TS packets sandwiched by the attribute TS packets $PCR_3$ and $PCR_4$. Thus, a proper time stamp can be added to each of TS packets included in the third processing block $U_3$. In other words, even if the PCR value of the attribute TS packet PC6 is much greater (or even much smaller) than the PCR value of the attribute TS packet PC4, the average input-timing interval between every two adjacent TS packets in the third processing block $U_3$ is computed not by making use of the PCR values of the attribute TS packets $PCR_3$ and $PCR_6$, but by making use of the PCR values of the attribute TS packets $PCR_3$ and $PCR_4$. Thus, each of time stamps separated away from each other by a proper uniform average input-timing interval can be added to one of TS packets included in the third processing block $U_3$. In addition, in the case of the third processing block $U_3$, the information on the position of the attribute TS packet $PCR_4$ (that is, the information on the position of an attribute TS packet including a discontinuity indicator set at 1 meaning improper PCR-value discontinuity) is used in the computation of the average input-timing interval. As described above, the information on the position of the attribute TS packet 4 is the number of TS packets located between the attribute TS packets $PCR_3$ and $PCR_4$.

As described above, the time-interval computation section 15 supplies the time-interval data generated thereby as data including predetermined time stamp values to the time-stamp computation unit 16 whereas the time-stamp computation unit 16 makes use of the time-interval data to derive a time stamp value for each of TS packets included in every processing block and adds the time stamp value to a TS packet for which the time stamp value has been derived.

For $(C_{n[m-1]} + R_n) \geq N_n$ the time stamp value $v_{n[m]}$ of the mth TS packet included in the processing block $U_n$ is expressed by Eq. (6). For $(C_{n[m-1]} + R_n) < N_n$, on the other hand, the time stamp value $V_{n[m]}$ of the mth TS packet included in the processing block $U_n$ is expressed by Eq. (7).

$$V_{n[m]} = V_{n[m-1]} + Q_n + 1 \quad \cdots \quad (6)$$

$$V_{n[m]} = V_{n[m-1]} + Q_n \quad \cdots \quad (7)$$

For $(C_{n[m-1]} + R_n) \geq N_n$, the carry-over $C_{n[m]}$ of the time stamp value $V_{n[m]}$ of the mth TS packet included in the processing block $U_n$ is expressed by Eq. (8). For $(C_{n[m-1]} + R_n) < N_n$, on the other hand, the carry-over $C_{n[m]}$ of the time stamp value $V_{n[m]}$ of the mth TS packet included in the processing block $U_n$ is expressed by Eq. (9).

$$C_{n[m]} = C_{n[m-1]} + R_n - N_n \quad \cdots \quad (8)$$

$$C_{n[m]} = C_{n[m-1]} + R_n \quad \cdots \quad (9)$$

However, each of Eqs. (6) to (9) holds true for m > 2.

The time-stamp computation unit 16 makes use of the time-interval data received from the time-interval computation section 15 as data including average input-timing intervals $Q_n$, remainders $R_n$ and predetermined time stamp values $V_{n[1]}$ to compute time stamp values $V_{n[m]}$ by carrying out computation processes based on Eqs. (6) to (9). Then, the time-stamp computation unit 16 adds each of the computed time stamp values $V_{n[m]}$ to one of mth TS packets each included in the processing block $U_n$.

If a time stamp value is computed by simply adding the average input-timing interval $Q_n$ to a preceding time stamp value $V_{n[m]}$ without taking the carry-over $C_{n[m]}$ into consideration, remainders are accumulated so that there will be a big difference between the computed time stamp value and the PCR value. By taking the carry-over $C_{n[m]}$ into consideration, on the other hand, it is possible to minimize the difference between the computed time stamp value and the PCR value.

To put it in detail, when the carry-over $C_{n[m]}$ is greater than the TS-packet count $N_n$, in accordance with Eq. (6), the time stamp value $V_{n[m]}$ is obtained by adding 1 to the time stamp value $V_{n[m]}$ for a case in which the carry-over $C_{n[m]}$ is smaller than the TS-packet count $N_n$. In addition, by subtracting the TS-packet count $N_n$ from the carry-over $C_{n[m]}$ in accordance with Eq. (8) in the case of a carry-over $C_{n[m]}$ is greater than the TS-packet count $N_n$, it is possible to prevent the difference between the time stamp value and the PCR value from becoming greater than 1 so that a time stamp having a value proper for a TS packet can be assigned to the TS packet.

In addition, as shown in Eqs. (6) to (9), the processing of the time-stamp computation unit 16 is processing carried out to merely compare a carry-over with a TS-packet count used for computing an average input-timing interval, add an average input-timing interval to the immediately preceding time stamp value and compute a new carry over. Thus, if hardware is used for implementing the time-stamp computation unit 16, the hardware circuit entails a small step count in comparison with, for example, a circuit for carrying out processing which demands operations such as a division to be performed. Thus, the time-stamp computation unit 16 can be implemented with an extremely small amount of hardware and time stamps can be added to their respective TS packets at a high speed.

That is to say, if the time-stamp computation unit 16 is implemented by hardware and the CPU 13 executes software to compute the time-interval data including quantities such as average input-timing intervals, their remainders and predetermined stamp values as the functions of the time-interval computation section 15, the time-stamp computation unit 16 can be used to merely compare a carry-over with a TS-packet count used for computing an average input-timing interval, add an average input-timing interval to the immediately preceding time stamp value and compute a new carry over. In this way, the functions of the time-interval computation section 15 and the time-stamp computation unit 16 can be carried out with a high efficiency by distributing the functions among the hardware of the time-stamp computation unit 16 and the software executed by the CPU 13 to perform the functions of the time-interval computation section 15.

In addition, by implementing the time-stamp computation unit 16 through the use of hardware, it is possible to prevent the load borne by the CPU 13 from substantially increasing. Thus, even in the case of a CPU embedded in an apparatus such as a hard-disk recorder as a CPU with a low processing performance, it is possible to prevent the CPU from being occupied completely by the processing of the apparatus. As a result, the cost of the apparatus such as a hard-disk recorder can be made low in comparison with a configuration in which a CPU having a high processing performance is employed to solve the problem caused by an increased load of the processing to add a proper time stamp to each of TS packets.

Thus, by carrying out the processing to add time stamps to their respective TS packets of for example a TV broadcast content, the content can be recorded in a recording apparatus or the like as an MPEG2-TS. Then, when the content is output later to a home network, the TS packets of the content are supplied a decoder with input timings based on time stamps added to the TS packets. Thus, the MPEG2-TS representing the content can be reproduced normally without distorting (breaking down) the video of the content. That is to say, even if the user edits the content represented by the MPEG2-TS, giving rise to improper discontinuity of PCR values included in the MPEG2-TS, after the editing process, it is possible to add proper time stamps to their respective TS packets of the MPEG2-TS to serve as time stamps allowing the MPEG2-TS representing the content to be reproduced normally.

In the embodiment implementing the time-stamp addition apparatus 11 as described above, the CPU 13 reads out the MPEG2-TS including no time stamps from the memory 12 and passes on the MPEG2-TS to the time-stamp computation unit 16. It is to be noted, however, that the CPU 13 may instead provide the time-stamp computation unit 16 with an address at which the MPEG2-TS is stored in the memory 12 and the time-stamp computation unit 16 then reads out the MPEG2-TS from the memory 12. In addition, in this case, the time-stamp computation unit 16 transfers the MPEG2-TS including time stamps to the memory 12 by carrying out an operation known as a DMA (Direct Memory Access) process. By carrying out the DMA process, it is possible to reduce the time it takes to carry out the whole processing to read out the MPEG2-TS including no time stamps from the memory 12 and store back the MPEG2-TS including time stamps in the memory 12.

It is to be noted that the packet analysis unit 14 does not have to provide the CPU 13 with the number of TS packets between the last attribute TS packet from which a PCR value is extracted and the tail TS packet located at the end of the MPEG2-TS. In the case of the typical MPEG2-TS shown in the diagram of Fig. 5, the number of TS packets between the last attribute TS packet and the tail TS packet located at the end of the MPEG2-TS is the TS-packet count $N_6$. Thus, the packet analysis unit 14 does not have to provide the CPU 13 with the TS-packet count $N_6$. This is because the CPU 13 has information on the length of the MPEG2-TS and is therefore capable of finding the TS-packet count $N_6$ from the stream length.

In addition, the packet analysis unit 14 may employ the discontinuity detection section 18 as a hardware functional block and the PCR detection section 19 as a hardware functional block physically separated from the hardware functional block implementing the discontinuity detection section 18. As an alternative, the packet analysis unit 14 employs the discontinuity detection section 18 and the PCR detection section 19 as a single integrated hardware functional block. In this case, the PCR detection section 19 is also capable of producing a result of determination as to whether or not the PID of a TS packet is the PCR_PID and a result of determination as to whether or not a TS packet includes an adaptation field. That is to say, the single integrated hardware functional block is configured to allow the discontinuity detection section 18 and the PCR detection section 19 to share the functions of producing a result of determination as to whether or not the PID of a TS packet is the PCR_PID and a result of determination as to whether or not a TS packet includes an adaptation field.

By allowing the discontinuity detection section 18 and the PCR detection section 19 to share the functions of producing a result of determination as to whether or not the PID of a TS packet is the PCR_PID and a result of determination as to whether or not a TS packet includes an adaptation field as described above, the processing load can be reduced to a small magnitude in comparison with a configuration in which separated functional blocks separately implement the functions of producing a result of determination as to whether or not the PID of a TS packet is the PCR_PID and the function of producing a result of determination as to whether or not a TS packet includes an adaptation field. Of course, it is also possible to provide a configuration in which the discontinuity detection section 18 and the PCR detection section 19 are provided with respectively the function of producing a result of determination as to whether or not the PID of a TS packet is the PCR_PID and the function of producing a result of determination as to whether or not a TS packet includes an adaptation field.

As described above, the information on the position of a specific attribute TS packet from which a PCR value is retrieved is the number of TS packets between another attribute TS packet immediately leading ahead of the specific attribute TS packet and the specific attribute TS packet. However, the information on the position of an attribute TS packet from which a PCR value is retrieved can also be the number of bytes counted by starting the counting operation from the beginning of the MPEG2-TS to the attribute TS packet. As an alternative, the information on the position of an attribute TS packet from which a PCR value is retrieved is expressed by the number of TS packets counted by starting the counting operation from the beginning of the MPEG2-TS to the attribute TS packet. By the same token, the information on the position of an attribute TS packet including a discontinuity indicator set at 1 can also be the number of bytes counted by starting the counting operation from the beginning of the MPEG2-TS to the attribute TS packet. As an alternative, the information on the position of an attribute TS packet including a discontinuity indicator set at 1 is expressed by the number of TS packets counted by starting the counting operation from the beginning of the MPEG2-TS to the attribute TS packet. Anyway, the information on the position of an attribute TS packet from which a PCR value is retrieved must be represented by a quantity uniform for the discontinuity detection section 18 and the PCR detection section 19.

It is to be noted that, in the embodiment described above, the CPU 13 executes software to carry out the function of the time-interval computation section 15 whereas separate hardware sections perform the functions of the packet analysis unit 14 and the time-stamp computation unit 16 respectively. However, the functions of the packet analysis unit 14 and the time-stamp computation unit 16 can also be carried out by execution of software in the CPU 13.

Each sequence of processes described previously can be carried out by hardware and/or execution of software. If a sequence of processes described above is carried out by execution of software, programs composing the software can be installed into a computer embedded in dedicated hardware, a general-purpose personal computer or the like from an external program provider for example by way of a network not shown in the figure or from a removable recording medium. A general-purpose personal computer is a personal computer, which can be made capable of carrying out a variety of functions by installing a variety of programs into the personal computer.

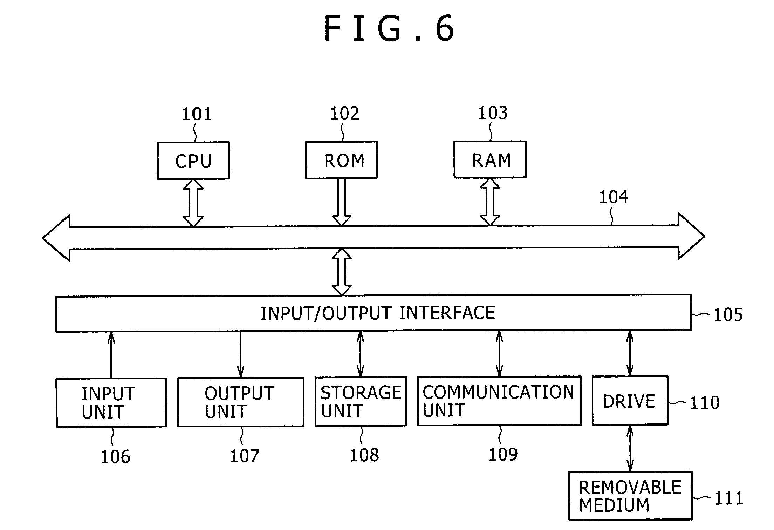

Fig. 6 is a block diagram showing a typical hardware configuration of the computer for executing the programs in order to carry out each sequence of processes described previously.

As shown in the block diagram of Fig. 6, in the computer, a CPU (Central Processing Unit) 101, a ROM (Read Only Memory) 102 and a RAM (Random Access Memory) 103 are connected to each other by a bus 104.

The bus 104 is also connected to an input/output interface 105. The input/output interface 105 is connected to an input unit 106, an output unit 107, a storage unit 108 and a communication unit 109. The input unit 106 includes a keyboard, a mouse and a microphone whereas the output unit 107 includes a display unit and a speaker. The storage unit 108 includes a hard disk or a nonvolatile memory. The communication unit 109 is a network interface. The input/output interface 105 is also connected to a drive 110 on which a removable recording medium 111 is mounted. The removable recording medium 111 can be a magnetic disk, an optical disk, a magneto-optical disk or a semiconductor memory.

In the computer with a typical hardware configuration shown in the block diagram of Fig. 6, the CPU 101 carries out each sequence of processes described earlier by execution of programs loaded from the storage unit 108 into the RAM 103 by way of the input/output interface 105 and the bus 104.

The aforementioned removable recording medium 111 for recording programs to be installed into the computer as programs to be executed by the computer is a package medium provided to the user separately from the main unit of the computer with a typical hardware configuration shown in the block diagram of Fig. 6. Examples of the removable recording medium 111 include the magnetic disk such as a flexible disk, the optical disk such as a CD-ROM (Compact Disk - Read Only Memory) or a DVD (Digital Versatile Disk), the magneto-optical disk such as an MD (Mini Disk) as well as the semiconductor memory. Instead of installing the programs from the removable recording mediums 111 into the storage unit 108, the programs can also be stored in advance in an embedded recording medium included in the main unit of the computer. The wire communication means includes a network such as a LAN (Local Area Network) and/or the Internet whereas the radio communication means makes use of digital satellite broadcasting.

When a removable recording medium 111 is mounted on the drive 110, the programs recorded on the removable recording medium 111 can be installed into the storage unit 108 by way of the input/output interface 105. As described above, instead of installing the programs from the removable recording mediums 111 into the storage unit 108, the programs can also be installed from an external program provider into the storage unit 108. In this case, the programs are downloaded from the external program provider into the storage unit 108 through wire or radio communication means and the communication unit 109. Also as described above, instead of installing the programs from the removable recording mediums 111 or the external program provider into the storage unit 108, the programs can also be stored in advance in an embedded recording medium included in the main unit of the computer. Examples of the embedded recording medium are a hard disk included in the storage unit 108 and the ROM 102.

It is worth noting that, in this specification, steps of each of the flowcharts described above can be carried out not only in an order prescribed in advance by the flowchart as an order along the time axis, but also concurrently in parallel processing or individually in object-oriented processing. In addition, each of the programs can be executed not only by one CPU, but also by a plurality of CPUs in the so-called distributed processing.

It is also to be noted that implementations of the present embodiment are by no means limited to the embodiment described above. That is to say, the embodiment can be modified in a variety of ways as long as the changes are within a range not deviating from essentials of the present embodiment.

**Claims**

1. A time-stamp addition apparatus configured to add a time stamp to each individual one of a plurality of TS (Transport Stream) packets included in an MPEG2-TS (Moving Picture Experts Group 2 Transport Stream) to serve as a time stamp representing an input timing to supply said individual TS packet to a decoder configured to decode said MPEG2-TS, said time-stamp addition apparatus comprising:

   a discontinuity detection section configured to acquire information on the position of a TS packet including a discontinuity indicator in case said discontinuity indicator included in said adaptation field of said TS packet indicates that PCRs (Program Clock References) taking a system clock frequency determined in advance as a reference are not properly continuous;
   a PCR detection section configured to extract the value of a PCR embedded in the adaptation field of a TS packet and acquire information on the position of said TS packet including said embedded PCR in case said TS packet includes said adaptation field and said adaptation field of said TS packet includes said PCR;
   a time-interval computation section configured to compute an average input-timing interval between said input timings of every two adjacent TS packets by making use of information acquired by said discontinuity detection section as said information on the position of a specific TS packet including a discontinuity indicator described as a discontinuity indicator indicating that said PCRs are not properly continuous, making use of a value extracted by said PCR detection section as the value of a PCR, and making use of information acquired by said PCR detection section as said information on the position of said particular TS packet including said embedded PCR; and
   a time-stamp computation section configured to compute said input timing of each of said TS packets on the basis of an average input-timing interval between said input timings of every two adjacent TS packets and add said time stamp to each of said TS packets to serve as a time stamp representing said input timing of said TS packet.

2. The time-stamp addition apparatus according to claim 1 wherein by a time interval computation section
   an average input-timing interval between every two adjacent TS packets each sandwiched by a particular TS packet and a specific TS packet immediately lagging behind said particular TS packet is computed on the basis of information on the position of said specific TS packet and used as an average input-timing interval between every two adjacent TS packets sandwiched by said particular TS packet and another particular TS packet immediately lagging behind said specific TS packet, said specific TS packet interposed therein, by said time-interval computation section,
   said specific TS packet being a TS packet that includes a discontinuity indicator indicating that said PCRs are not properly continuous,
   each of said particular TS packet and said other particular TS packet being a TS packet that includes said PCR.

3. The time-stamp addition apparatus according to claims 1 to 2 wherein by said time-interval computation section:

   an average input-timing interval between every two adjacent TS packets including said embedded PCR is computed on the basis of PCR values extracted from said two particular TS packets;
   an average input-timing interval between every two adjacent TS packets sandwiched by the head TS packet located at the beginning of said MPEG2-TS and a first particular TS packet of said MPEG2-TS is computed on the basis of a PCR value extracted from said first particular TS packet and a PCR value extracted from another particular TS packet immediately lagging behind said first particular TS packet; and
   an average input-timing interval between every two adjacent TS packets sandwiched by a last particular TS packet of said MPEG2-TS and the tail TS packet located at the end of said MPEG2-TS and is computed on the basis of a PCR value extracted from said last particular TS packet and a PCR value extracted from a further particular TS packet immediately leading ahead of said last particular TS packet;
   each of said first particular TS packet, said other particular TS packet, said last particular TS packet and said further particular TS packet being a TS packet that includes said PCR.

**4.** The time-stamp addition apparatus according to claims 1 to 3 wherein each of said TS packets has a PID (Packet Identifier) used for identifying said TS packet, and said PCR detection section executes the steps of:

analyzing a PAT (Program Association Table) to serve as a PAT including the PID of other TS packet including a PMT (Program Map table) serving as a list of the PIDs of said TS packets in order to search said PAT for the PID of said other TS packet;
analyzing said PMT included in said other TS packet identified by said PID of said other TS packet in order to search said PMT for the PID of an attribute TS packet including said embedded PCR;
producing a result of determination as to whether or not a TS packet identified by said PID of said attribute TS packet including said embedded PCR includes an adaptation field; and
analyzing a TS packet determined to be an attribute TS packet including said adaptation field as indicated by said result of said determination in order to extract the value of said embedded PCR from said adaptation field and acquire information on the position of said attribute TS packet including said embedded PCR.

**5.** The time-stamp addition apparatus according to claim 4 wherein said discontinuity detection section analyzes a TS packet determined to be an attribute TS packet including an adaptation field as indicated by said determination result produced by said PCR detection section in order to acquire information on the position of said attribute TS packet including said discontinuity indicator showing that said PCRs are not properly continuous.

**6.** The time-stamp addition apparatus according to claims 1 to 5 wherein:

said PCR detection section acquires information on the position of a first particular TS packet, information on the position a last particular TS packet or information on the position of any middle particular PS packet between said first and last particular TS packets;
said information on the position of said first particular TS packet is the number of TS packets between the head TS packet located at the beginning and said first particular TS packet;
said information on the position of said middle particular TS packet is the number of TS packets between a particular TS packet immediately leading ahead of said middle particular TS packet and said middle particular TS packet;
said information on the position of said last particular TS packet is the number of TS packets between said last particular TS packet and the tail TS packet located at the end;
each of said first particular TS packet, said middle particular TS packet, and said last particular RS packets is a TS packet that includes said PCR; and
information acquired by said discontinuity detection section as information on the position of a specific TS packet is the number of TS packets between a particular TS packet immediately leading ahead of said specific TS packet and said specific TS packet;
said specific TS packet being a TS packet that includes a discontinuity indicator indicating that said PCRs are not properly continuous on the other hand said particular TS packet being a TS packet that includes said PCR.

**7.** The time-stamp addition apparatus according to claims 1 to 6 wherein:

information acquired by said PCR detection section as said information on the position of a particular TS packet including said PBR is the number of bytes between the beginning of said MPEG2-TS and said particular TS packet including said embedded PDR or the number of TS packets between the beginning of said MPEG2-TS and said particular TS packet; and
information acquired by said discontinuity detection section as said information on the position of a specific TS packet including a discontinuity indicator indicating that said PCRs are not properly continuous is the number of bytes between the beginning of said MPEG2-TS and said specific TS packet or the number of TS packets between the beginning of said MPEG2-TS and said specific TS packet.

**8.** A time-stamp addition method for adding a time stamp to each individual one of a plurality of TS packets to serve as a time stamp representing an input timing to supply said individual TS packet to a decoder configured to decode said MPEG2-TS, said time-stamp addition method comprising the steps of:

acquiring information on the position of a TS packet including a discontinuity indicator described in an adaptation field of said TS packet in case said TS packet indicates that PCRs (Program Clock References) taking a system clock frequency determined in advance as a reference are not properly continuous;
extracting the value of a PCR of a TS packet and acquiring information on the position of said TS packet including said embedded PCR in case said TS packet includes said adaptation field and said adaptation field of said TS packet including said embedded PCR;

computing an average input-timing interval between said input timings of every two adjacent TS packets by making use of information on the position of a specific TS packet including a discontinuity indicator indicating that said PCRs are not properly continuous, making use of the value of a PCR, and making use of said information on the position of said particular TS packet including said embedded PCR; and

computing said input timing of each of said TS packets on the basis of said average input-timing interval computed at said time-interval of every two adjacent TS packets and adding said time stamp to each of said TS packets to serve as a time stamp representing said input timing of said TS packet.

9. A time-stamp addition program to be executed by a computer for carrying out processing to add a time stamp to each individual one of a plurality of TS packets to serve as a time stamp representing an input timing to supply said individual TS packet to a decoder configured to decode said MPEG2-TS, wherein said processing comprises the steps of:

acquiring information on the position of a TS packet including a discontinuity indicator described in an adaptation field of said TS packet in case said TS packet indicates that PCRs (Program Clock References) taking a system clock frequency determined in advance as a reference are not properly continuous;

extracting the value of a PCR of a TS packet and acquiring information on the position of said TS packet including said embedded PCR in case said TS packet includes said adaptation field and said adaptation field of said TS packet including said embedded PCR;

computing an average input-timing interval between said input timings of every two adjacent TS packets by making use of information on the position of a specific TS packet including a discontinuity indicator indicating that said PCRs are not properly continuous, making use of the value of a PCR, and making use of said information on the position of said particular TS packet including said embedded PCR; and

computing said input timing of each of said TS packets on the basis of said average input-timing interval computed at said time-interval of every two adjacent TS packets and adding said time stamp to each of said TS packets to serve as a time stamp representing said input timing of said TS packet.

10. A time-stamp addition apparatus configured to add a time stamp to each individual one of a plurality of TS (Transport Stream) packets included in an MPEG2-TS (Moving Picture Experts Group 2 Transport Stream) to serve as a time stamp representing an input timing to supply said individual TS packet to a decoder configured to decode said MPEG2-TS, said time-stamp addition apparatus comprising:

discontinuity detection means for acquiring information on the position of a TS packet including a discontinuity indicator in case said discontinuity indicator included in said adaptation field of said TS packet indicates that PCRs (Program Clock References) taking a system clock frequency determined in advance as a reference are not properly continuous;

PCR detection means for extracting the value of a PCR embedded in the adaptation field of a TS packet and acquiring information on the position of said TS packet including said embedded PCR in case said TS packet includes said adaptation field and said adaptation field of said TS packet includes said PCR;

time-interval computation means for computing an average input-timing interval between said input timings of every two adjacent TS packets by making use of information acquired by said discontinuity detection means as said information on the position of a specific TS packet including a discontinuity indicator described as a discontinuity indicator indicating that said PCRs are not properly continuous, making use of a value extracted by said PCR detection means as the value of a PCR, and making use of information acquired by said PCR detection means as said information on the position of said particular TS packet including said embedded PCR; and

time-stamp computation means for computing said input timing of each of said TS packets on the basis of an average input-timing interval between said input timings of every two adjacent TS packets and add said time stamp to each of said TS packets to serve as a time stamp representing said input timing of said TS packet.

# FIG.1

PACKET ANALYSIS UNIT ~14

18

DISCONTINUITY
DETECTION SECTION

PCR DETECTION
SECTION ~19

16

TIME-STAMP
COMPUTATION
UNIT

11

17

TIME-INTERVAL
COMPUTATION
SECTION

15

CPU

13

MEMORY

12

# FIG.2

INPUT DATA (MPEG2-TS)

| TS PACKET | TS PACKET | TS PACKET | ··· | TS PACKET |

188 BYTES

OUTPUT DATA
(MPEG2-TS INCLUDING TIME STAMPS)

| TS PACKET | TS PACKET | TS PACKET | ··· | TS PACKET |

192 BYTES

TIME STAMP (4 BYTES)

# FIG.3

| TIME-STAMP COMPUTATION UNIT | CPU (TIME-INTERVAL COMPUTATION SECTION) | PACKET ANALYSIS UNIT |
|---|---|---|

S11 — READ OUT MPEG2-TS

S12 → S21

MPEG2-TS

S22 — ANALYZE TS PACKETS

S13 ← S23

ANALYSIS COMPLETION NOTICE

S14 — COMPUTE INPUT-TIMING INTERVALS BETWEEN TS PACKETS

S31 ← S15

TIME-INTERVAL DATA OF MPEG2-TS

S32 — COMPUTE TIME STAMPS AND ADD TIME STAMPS TO TS PACKETS

S33 → S16

MPEG2-TS INCLUDING TIME STAMPS

S17 — STORE MPEG2-TS

EP 2 088 781 A1

# FIG.4

```
                          START

                            │◄─────────────────────────┐
                            ▼                           │
                          S41                           │
    NO             ╱PID = PCR_PID?╲                   S49
   ◄──────────────╲               ╱       ┌──────────────────────────┐
                    ╲            ╱         │ TAKE NEXT TS PACKET       │
                       │YES                │ AS PROCESSING SUBJECT     │
                       ▼                   └──────────────────────────┘
                     S42                            ▲
    NO          ╱ IS adaption_ ╲                    │
   ◄───────────╲ field INCLUDED?╱                   │
                 ╲             ╱                     │
                    │YES                            │
                    ▼                               │
                  S43                               │
         ╱ discontinuity_ ╲      YES     S44        │
        ╲ indicator = 1?  ╱────────┐               │
          ╲             ╱          ▼                │
             │NO         ┌────────────────────────┐ │
             │           │ ACQUIRE INFORMATION     │ │
             │           │ ON POSITION OF          │ │
             │           │ discontinuity_indicator │ │
             │           └────────────────────────┘ │
             │◄──────────────────────┘              │
             ▼                                       │
           S45                                       │
    NO     ╱ PCR_Flag = 1? ╲                         │
   ◄──────╲                 ╱                        │
            ╲             ╱                          │
               │YES                                  │
               ▼                                     │
        ┌──────────────────┐  S46                    │
        │ EXTRACT PCR VALUE │                        │
        │ FROM TS PACKET    │                        │
        └──────────────────┘                         │
               │                                     │
               ▼                                     │
        ┌──────────────────┐  S47                    │
        │ ACQUIRE INFORMATION│                       │
        │ ON POSITION OF PCR │                       │
        └──────────────────┘                         │
               │                                     │
               ▼                                     │
             S48                                     │
         ╱ END OF MPG2-TS? ╲       NO                │
        ╲                  ╱────────────────────────┘
          ╲             ╱
             │YES
             ▼
           END
```

# FIG.5

EP 2 088 781 A1

MPEG2-TS

| PROCESSING BLOCK $U_1$ | PROCESSING BLOCK $U_2$ | PROCESSING BLOCK $U_3$ | PROCESSING BLOCK $U_4$ | PROCESSING BLOCK $U_5$ |

$PCR_1$  $PCR_2$  $PCR_3$  $PCR_4$  $\alpha$  $PCR_5$  $PCR_6$  $PCR_7$  $PCR_8$

PACKET COUNT : $N_0$   $N_1$   $N_2$   $N_3$   $N_4$   $N_5$   $N_6$

| $PCR_1$ | $PCR_2$ | $PCR_3$ | $PCR_4$ | $PCR_5$ | $PCR_6$ | $PCR_7$ | $PCR_8$ |
|---|---|---|---|---|---|---|---|
| PID=PCR_PID | PID=PCR_PID | PID=PCR_PID | PID=PCR_PID | PID=PCR_PID | PID=PCR_PID | PID=PCR_PID | PID=PCR_PID |
| PCR_flag = 1 | PCR_flag = 1 | PCR_flag = 1 | PCR_flag = 1 | PCR_flag = 0 | PCR_flag = 1 | PCR_flag = 1 | PCR_flag = 1 |
| Discontinuty _indicator = 0 | Discontinuty _indicator = 0 | Discontinuty _indicator = 0 | Discontinuty _indicator = 1 | Discontinuty _indicator = 1 | Discontinuty _indicator = 0 | Discontinuty _indicator = 0 | Discontinuty _indicator = 0 |

# FIG.6

EP 2 088 781 A1

Europäisches
Patentamt

European
Patent Office

Office européen
des brevets

**EUROPEAN SEARCH REPORT**

Application Number

EP 09 00 1447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MCCANN K D: "Testing and conformance checking in the digital television environment" BROADCASTING CONVENTION, INTERNATIONAL (CONF. PUBL. NO. 428) AMSTERDAM, NETHERLANDS 12-16 SEPT. 1996, LONDON, UK,IEE, UK, 12 September 1996 (1996-09-12) , pages 331-336, XP006510041 ISBN: 978-0-85296-663-1 * the whole document * | 1-10 | INV. H04N7/24 |
| A | BIRCH C H: "MPEG splicing and bandwidth management" BROADCASTING CONVENTION, 1997. IBS 97., INTERNATIONAL (CONF. PUBL. 447 ) AMSTERDAM, NETHERLANDS 12-16 SEPT. 1997, LONDON, UK,IEE, UK, 12 September 1997 (1997-09-12), pages 541-546, XP006508813 ISBN: 978-0-85296-694-5 * the whole document * | 1-10 | |
| A | US 2003/066094 A1 (VAN DER SCHAAR AUKE SJOERD [US] ET AL) 3 April 2003 (2003-04-03) * abstract * * paragraph [0030]; figure 3a * | 1-10 | TECHNICAL FIELDS SEARCHED (IPC) H04N |
| A | RAMASWAMY A ET AL: "Design of an efficient DVB/MPEG transport stream remultiplexor" CIRCUITS AND SYSTEMS, 2000. PROCEEDINGS OF THE 43RD IEEE MIDWEST SYMPO SIUM ON AUGUST 8-11, 2000, PISCATAWAY, NJ, USA,IEEE, vol. 2, 8 August 2000 (2000-08-08), pages 754-757, XP010558615 ISBN: 978-0-7803-6475-2 * the whole document * | 1-10 | |

The present search report has been drawn up for all claims

| Place of search | Date of completion of the search | Examiner |
|---|---|---|
| Munich | 5 June 2009 | Schoeyer, Marnix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 09 00 1447

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2009

| Patent document cited in search report | Publication date | Patent family member(s) | Publication date |
|---|---|---|---|
| US 2003066094 A1 | 03-04-2003 | CN 1561642 A<br>EP 1438858 A1<br>WO 03030554 A1<br>JP 2005505211 T | 05-01-2005<br>21-07-2004<br>10-04-2003<br>17-02-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008028541 A
- JP 2001285233 A
- JP HEI1141193 B